# EUROPÄISCHE PATENTSCHRIFT

(11) **EP 2 948 356 B1**
(45) Veröffentlichungstag und Bekanntmachung des Hinweises auf die Patenterteilung: **15.03.2017**
(21) Anmeldenummer: 14701903.8
(22) Anmeldetag: 14.01.2014
(51) Int. Cl.: B60W 40/12, B60W 50/00, B60R 9/04, B60W 50/14

(54) **VERFAHREN ZUM BETREIBEN EINES KRAFTWAGENS**
METHOD FOR OPERATING A MOTOR VEHICLE
PROCÉDÉ POUR FAIRE FONCTIONNER UNE AUTOMOBILE

(30) Priorität: 23.01.2013 DE 102013001118
(43) Veröffentlichungstag der Anmeldung: 02.12.2015
(73) Patentinhaber: Audi AG, 85045 Ingolstadt (DE)
(72) Erfinder: STADLER, Michael, 85110 Arnsberg (DE)
(74) Vertreter: Herbst, Matthias Heinz
(86) Internationale Anmeldenummer: PCT/EP2014/000064
(87) Internationale Veröffentlichungsnummer: WO 2014/114431

(56) Entgegenhaltungen:
- DE-A1-102006 049 986
- US-A1- 2008 117 028
- Kamei: "Travel & Transport", , 12. August 2011 (2011-08-12), Seiten 1-25, XP055116301, Gefunden im Internet: URL:https://web.archive.org/web/2011081218 2626/http://www.kamei.de/res/dnl/kamei/en/ RT_EN.17.pdf [gefunden am 2014-05-05]

## Beschreibung

Die Erfindung betrifft ein Verfahren zum Betreiben eines Kraftwagens.

Die DE 10 2006 049 986 A1 beschreibt ein Kraftfahrzeug mit einem System zur Fahrwerksregelung. Auf dem Dach des Kraftfahrzeugs ist ein optischer Sensor angebracht, welcher in der Lage ist, eine auf dem Dach montierte Dachbox zu erkennen, um in einem Steuergerät ein Kennfeld für einen früheren ESP-Eingriff einzustellen, wenn die Dachbox auf dem Dach montiert ist.

Die US 2008/0117028 A1 beschreibt ein Beispiel für ein RFID-basiertes Komponentenerkennungssystem. Hierbei enthalten an Reifenseitenwänden befestigte RFID-Transponder Betriebsinformationen, die üblicherweise in Seitenwände von Reifen eingeprägt sind. Nach einem Komponentenscan wird anhand der RFID-Daten die Geschwindigkeitsklasse desjenigen Reifen ermittelt, der zu der niedrigsten aller am Fahrzeug befindlichen Reifen gehört. Hierdurch werden Betriebseigenschaften des Fahrzeugs nachkalibriert und der Fahrer erhält ein Geschwindigkeitswarnsignal oder es wird eine Geschwindigkeitsbegrenzung aktiviert.

Extern am Kraftwagen angebrachte Objekte, wie beispielsweise Dachgepäckträger, Skiboxen, Fahrradhalter, Sportdevotionalien oder dgl. können die aerodynamischen und fahrdynamischen Eigenschaften des Kraftwagens verändern, so dass dieser gegebenenfalls für den Fahrer unerwartete Fahreigenschaften aufweist.

Ferner besteht die Gefahr, dass die vom Fahrtwind auf solche Objekte ausgeübte Kraft die Haltekraft der Halterung des Objekts überschreitet, so dass sich das Objekt löst. Dies kann ein Risiko für andere Verkehrsteilnehmer darstellen.

Es ist daher Aufgabe der vorliegenden Erfindung, ein Verfahren der eingangs genannten Art bereitzustellen, welches die Fahrsicherheit bei der Verwendung extern am Fahrzeug angebrachter Objekte verbessert.

Diese Aufgabe wird durch ein Verfahren mit den Merkmalen des Patentanspruchs 1 gelöst.

Bei einem erfindungsgemäßen Verfahren zum Betreiben eines Kraftwagens wird das Vorhandensein eines extern am Kraftwagen angebrachten Objektes erkannt und bei Erkennen des Vorhandenseins ein Steuersignal generiert. Das Objekt wird durch Empfangen eines Nahfeldkommunikationssignals eines am Objekt angebrachten RFID-Transponders erkannt. Das Nahfeldkommunikationssignal umfasst eine zulässige Höchstgeschwindigkeit des Kraftwagens bei angebrachtem Objekt. Der RFID-Transponder ist mit einer Zugehörigkeitsinformation zum Kraftwagen versehen, so dass nicht versehentlich RFID-Transponder benachbarter Kraftwagen ausgelesen werden und die Geschwindigkeit des Kraftwagens unnötig beschränkt wird.

Das im Rahmen des Verfahrens generierte Steuersignal kann genutzt werden, um die Fahrsicherheit des Kraftwagens und die Sicherheit anderer Verkehrsteilnehmer zu verbessern.

Im einfachsten Fall wird hierfür durch das Steuersignal eine Warnung an einen Fahrer des Kraftwagens ausgelöst. Dies kann beispielsweise eine Aufforderung zu besonders vorsichtigem Fahrverhalten, der Vorschlag einer nicht zu überschreitenden empfohlenen Höchstgeschwindigkeit oder dergleichen sein, so dass der Fahrer eigenverantwortlich sein Fahrverhalten an die Konfiguration seines Fahrzeugs anpassen kann.

Alternativ oder zusätzlich kann das Steuersignal eine Begrenzung einer Höchstgeschwindigkeit des Kraftwagens auslösen. Hierdurch wird besonders zuverlässig sichergestellt, dass von dem am Fahrzeug angebrachten Objekt keine Gefahr für die Insassen des Kraftwagens oder für andere Verkehrsteilnehmer ausgeht.

Besonders einfach kann die Erkennung durchgeführt werden, da sie durch Empfangen eines Nahfeldkommunikationssignals eines am Objekt angebrachten Transponders durchgeführt wird. Dies ermöglicht es zudem, dem Objekt mittels des Transponders spezifische Informationen zuzuordnen, die eine objektspezifische Anpassung des Fahrverhaltens ermöglichen. Besonders einfach und kostengünstig ist hierbei die Verwendung von RFID-Transpondern.

Um optimale Fahrsicherheit zu gewährleisten, ist es zweckmäßig, dass das Nahfeldkommunikationssignal eine zulässige Höchstgeschwindigkeit des Kraftwagens bei angebrachtem Objekt umfasst. Da diese für unterschiedliche Objekte stark variieren kann, wird somit eine besonders gute Fahrsicherheit und Sicherheit für andere Verkehrsteilnehmer realisiert, ohne dass die Höchstgeschwindigkeit unnötig eingeschränkt wird.

Zusätzlich kann das Nahfeldkommunikationssignal einen dem Objekt zugeordneten Identifikationscode umfassen, welchem durch ein Steuergerät des Kraftwagens eine zulässige Höchstgeschwindigkeit des Kraftwagens bei angebrachtem Objekt zuordenbar ist. Hierdurch wird eine besonders sichere Anpassung des Fahrverhaltens an das spezifische Objekt erzielt und eine unnötige Geschwindigkeitsbeschränkung vermieden.

Das Objekt ist dabei vorzugsweise ein Dekorationsobjekt, ein Fahrradhalter, ein Dachgepäckträger, eine Dachbox, eine Warnflagge für überlange Ladung oder dergleichen. Für alle derartigen Objekte kann mittels des beschriebenen Verfahren ein deutlicher Sicherheitsgewinn im Fahrtbetrieb des Kraftwagens erzielt werden.

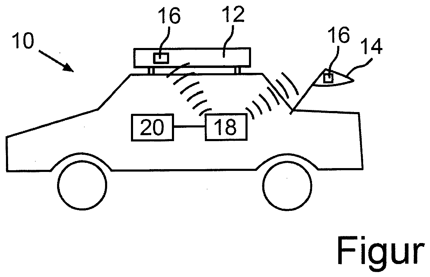

Im Folgenden werden die Erfindung und ihre Ausführungsformen anhand der Zeichnung näher erläutert. Die einzige Figur zeigt dabei eine schematische Darstellung eines zur Ausführung eines Ausführungsbeispiels des erfindungsgemäßen Verfahrens ausgelegten Kraftwagen.

Ein Kraftwagen 10 kann mit verschiedenen externen Anbauteilen versehen werden, die entweder funktional, wie beispielsweise einem Dachgepäckträger 12, oder dekorativ, wie beispielsweise ein Wimpel 14, sind.

Ein beladener Dachgepäckträger 12 kann den Schwerpunkt des Kraftwagens 10 deutlich verändern und Einfluss auf dessen Luftwiderstand nehmen, was das Fahrverhalten des Kraftwagens 10 auf unerwartete Weise ändern kann. Sowohl Wimpel 14 als auch Dachgepäckträger 12 sind zudem hohen Kräften durch den Fahrtwind ausgesetzt, so dass bei hohen Fahrtgeschwindigkeiten die Gefahr besteht, dass sich die genannten Anbauteile 12, 14 von ihren Halterungen lösen und damit andere Verkehrsteilnehmer gefährden. Beim Fahren des Kraftwagens 10 ist daher bei der Verwendung solcher Anbauteile 12, 14 besondere Vorsicht geboten.

Um eine verbesserte Fahrtsicherheit zu bieten, sind die Anbauteile 12, 14 daher mit RFID-Transpondern 16 ausgestattet. Ein Steuergerät 18 des Kraftwagens 10 kann somit ermittelt, ob ein Anbauteil 12, 14 vorhanden ist. Im einfachsten Fall kann dann ein Hinweis an den Fahrer des Kraftwagens 10 generiert werden, der ihn zu angepasstem Fahrverhalten auffordert.

Alternativ oder zusätzlich kann das Steuergerät 18 ein Signal an ein Motorsteuergerät 20 des Kraftwagens 10 übermitteln, so dass die Höchstgeschwindigkeit des Kraftwagens 10 automatisch begrenzt wird. Hierdurch wird die beste Sicherheit erreicht, da der Kraftwagen 10 somit automatisch gehindert wird, einen Fahrzustand einzunehmen, in dem die Anbauteile 12, 14 eine Gefährdung darstellen könnten.

Neben der Information über die Anwesenheit eines der Anbauteile 12, 14 als solche können durch die RFID-Transponder 16 noch weitere Informationen an das Steuergerät 18 übermittelt werden. Zumindest ist der RFID-Transponder dazu vorbereitet, eine zulässige Höchstgeschwindigkeit bei installiertem Anbauteil 12, 14 an das Steuergerät 18 zu senden, so dass für unterschiedliche Anbauteile die jeweils geeignetste Höchstgeschwindigkeit eingestellt werden kann.

Eine Weiterbildung sieht vor, dass der RFID-Transponder 16 einen anbauteilspezifischen Identifizierungscode übermitteln kann. Anhand einer im Steuergerät 18 hinterlegten Tabelle kann dann die für die Gesamtkonfiguration des Kraftwagens 10 optimale Geschwindigkeitsbegrenzung gewählt werden.

Der RFID-Transponder 16 ist mit einer Zugehörigkeitsinformation zum Kraftwagen 10 versehen, so dass nicht versehentlich Transponder benachbarter Kraftwagen ausgelesen werden und die Geschwindigkeit unnötig beschränkt wird.

## Patentansprüche

1. Verfahren zum Betreiben eines Kraftwagens (10), bei welchem das Vorhandensein eines extern am Kraftwagen (10) angebrachten Objektes (12, 14) erkannt wird und bei Erkennen des Vorhandenseins ein Steuersignal generiert wird wobei das Objekt (12, 14) durch Empfangen eines Nahfeldkommunikationssignals eines am Objekt (12, 14) angebrachten RFID-Transponders (16) erkannt wird,
wobei das Nahfeldkommunikationssignal eine zulässige Höchstgeschwindigkeit des Kraftwagens (10) bei angebrachtem Objekt (12, 14) umfasst, wobei der RFID-Transponder (16) mit einer Zugehörigkeitsinformation zum Kraftwagen (10) versehen ist, so dass nicht versehentlich RFID-Transponder benachbarter Kraftwagen ausgelesen werden und die Geschwindigkeit des Kraftwagens (10) unnötig beschränkt wird.

2. Verfahren nach Anspruch 1,
**dadurch gekennzeichnet, dass**
das Steuersignal eine Warnung an einen Fahrer des Kraftwagens (10) auslöst.

3. Verfahren nach Anspruch 1 oder 2,
**dadurch gekennzeichnet, dass**
das Steuersignal eine Begrenzung einer Höchstgeschwindigkeit des Kraftwagens (10) auslöst.

4. Verfahren nach einem der Ansprüche 1 bis 3,
**dadurch gekennzeichnet, dass**
das Nahfeldkommunikationssignal einen dem Objekt (12, 14) zugeordneten Identifikationscode umfasst, welchem durch ein Steuergerät (18) des Kraftwagens (10) eine zulässige Höchstgeschwindigkeit des Kraftwagens (10) bei angebrachtem Objekt (12, 14) zuordenbar ist.

5. Verfahren nach einem der Ansprüche 1 bis 4,
**dadurch gekennzeichnet, dass**
das Objekt (12, 14) ein Dekorationsobjekt, ein Fahrradhalter, ein Dachgepäckträger, eine Dachbox, eine Warnflagge für überlange Ladung oder dergleichen ist.

6. Kraftwagen (10) mit einer Steuereinrichtung, welche zur Ausführung eines Verfahrens nach einem der Ansprüche 1 bis 5 ausgelegt ist.

## Claims

1. Method for operating a motor vehicle (10), in which the presence of an object (12, 14) attached externally on the motor vehicle (10) is identified and, on recognising the presence of the latter, a control signal is generated, wherein the object (12, 14) is recognised by receiving a near field communication signal of an RFID transponder (16) attached to the object (12, 14),
wherein the near field communication signal includes a permissible maximum speed of the motor vehicle (10) with an attached object (12, 14), wherein the RFID transponder (16) is provided with affiliation information regarding the motor vehicle (10) so that RFID transponders of adjacent motor vehicles are not read inadvertently and the speed of the motor vehicle (10) is not restricted unnecessarily.

2. Method according to claim 1,
**characterised in that**
the control signal triggers a warning to a driver of the motor vehicle (10).

3. Method according to claim 1 or 2,
**characterised in that**
the control signal triggers a delimitation of a maximum speed of the motor vehicle (10).

4. Method according to any one of claims 1 to 3,
**characterised in that**
the near field communication signal comprises an identification code assigned to the object (12, 14), to which, by means of a control device (18) of the motor vehicle (10), a permissible maximum speed of the motor vehicle (10) can be assigned with an attached object (12, 14).

5. Method according to any one of claims 1 to 4,
**characterised in that**
the object (12, 14) is a decorative object, a bicycle rack, a roof rack, a roof box, a warning flag for an excessively long load or the like.

6. Motor vehicle (10) comprising a control device, which is configured to perform a method according to any one of claims 1 to 5.

## Revendications

1. Procédé servant à faire fonctionner un véhicule à moteur (10), dans lequel la présence d'un objet (12,14) installé sur le véhicule à moteur (10) à l'extérieur est identifiée et un signal de commande est généré lorsque la présence est identifiée, dans lequel l'objet (12, 14) est identifié par la réception d'un signal de communication en champ proche d'un transpondeur RFID (16) installé au niveau de l'objet (12,14),
dans lequel le signal de communication en champ proche comprend une vitesse maximale autorisée du véhicule à moteur (10) lorsque l'objet (12, 14) est installé, dans lequel le transpondeur RFID (16) est pourvu d'une information d'appartenance au véhicule à moteur (10) de sorte que des transpondeurs RFID de véhicules à moteur voisins ne soient pas lus par inadvertance et que la vitesse du véhicule à moteur (10) ne soit pas limitée inutilement dans ce cas.

2. Procédé selon la revendication 1,
**caractérisé en ce que**
le signal de commande déclenche une alerte à l'attention d'un conducteur du véhicule à moteur (10).

3. Procédé selon la revendication 1 ou 2,
**caractérisé en ce que**
le signal de commande déclenche une limitation d'une vitesse maximale du véhicule à moteur (10).

4. Procédé selon l'une quelconque des revendications 1 à 3,
**caractérisé en ce que**
le signal de communication en champ proche comprend un code d'identification associé à l'objet (12, 14), auquel une vitesse maximale autorisée du véhicule à moteur (10) peut être associée par un appareil de commande (18) du véhicule à moteur (10) lorsque l'objet (12,14) est installé.

5. Procédé selon l'une quelconque des revendications 1 à 4,
**caractérisé en ce que**
l'objet (12, 14) est un objet de décoration, un porte-bicyclettes, une galerie porte-bagages, un coffre de toit, un drapeau d'avertissement de cargaison excessivement longue ou similaire.

6. Véhicule à moteur (10) avec un dispositif de commande, qui est configuré pour l'exécution d'un procédé selon l'une quelconque des revendications 1 à 5.
